# EUROPÄISCHE PATENTSCHRIFT

(11) **EP 2 901 841 B1**
(45) Veröffentlichungstag und Bekanntmachung des Hinweises auf die Patenterteilung: **15.11.2017**
(21) Anmeldenummer: 15152480.8
(22) Anmeldetag: 26.01.2015
(51) Int. Cl.: A01D 34/66, A01B 59/06

(54) **MÄHWERK FÜR EINEN FRONTANBAU AN EIN LANDWIRTSCHAFTLICHES ZUGFAHRZEUG**
MOWING DEVICE FOR A FRONT MOUNTING ON AN AGRICULTURAL TOWING VEHICLE
MÉCANISME DE TONTE DESTINÉ À ÊTRE MONTÉ SUR L'AVANT D'UN VÉHICULE DE TRACTION AGRICOLE

(30) Priorität: 31.01.2014 DE 102014101232
(43) Veröffentlichungstag der Anmeldung: 05.08.2015
(73) Patentinhaber: CLAAS Saulgau GmbH, 88348 Bad Saulgau (DE)
(72) Erfinder: Speer, Christian, 88348 Bad Saulgau (DE)

(56) Entgegenhaltungen:
- EP-A1- 0 876 748
- DE-A1- 3 323 668
- DE-A1- 3 438 353
- DE-A1- 4 007 735
- DE-A1- 19 624 396
- DE-U1- 8 701 093

## Beschreibung

Die Erfindung betrifft ein Mähwerk für einen Frontanbau an ein landwirtschaftliches Zugfahrzeug.

Mähwerke für einen Frontanbau an ein landwirtschaftliches Zugfahrzeug sind aus dem Stand der Technik bekannt. So verfügt ein solches Mähwerk über einen Anbaurahmen, über welchen das Mähwerk an ein Fronthubwerk eines landwirtschaftlichen Zugfahrzeugs angekoppelt werden kann. So kann zum Beispiel vorgesehen sein, das Mähwerk über den Anbaurahmen an ein sogenanntes Waiste-Dreieck eines Fronthubwerks anzukoppeln. Während des Mähbetriebs erfolgt dann die Bodenanpassung der Mäheinheit über das Fronthubwerk des Zugfahrzeugs. Dies verfügt über den Nachteil, dass die Bodenanpassung an die Dynamik des Fronthubwerks des Zugfahrzeugs gekoppelt ist, sodass insbesondere bei Mähwerken mit hohem Gewicht die Bodenanpassung nur mit geringer Dynamik und nur mit hohem Auflagegewicht des Mähwerks auf dem zu mähenden Untergrund erfolgen kann. Dies ist von Nachteil.

DE 40 07 735 A1 offenbart eine landwirtschaftliche Arbeitsmaschine zum Frontanbau an Schlepper mit einem Traggestell und einem mittels Lenker damit verbundenen Maschinenrahmen, der in der senkrechten und um eine, in Fahrtrichtung liegende Längsachse beweglich mit dem Traggestell verbunden ist, wobei die Lenker so ausgebildet sind, dass sie zusätzlich eine Drehbeweglichkeit um eine auf die Fahrtrichtung bezogene Querachse zwischen dem Traggestell und dem Maschinenrahmen zulassen.

Aus DE 87 01 093 U1 ist ein Traggestell für eine landwirtschaftliche Maschine, insbesondere ein für den Frontanbau an einem Schlepper vorgesehenes Mähwerk bekannt, welches bei der Mäharbeit ziehend über den Erdboden bewegt wird, mit einem ersten Rahmen zur Ankopplung an der Anhänge- und Aushebevorrichtung eines Schleppers, wobei dieser Rahmen über wenigstens ein Lenkerparallelogramm mit einem zweiten Rahmen gelenkig verbunden ist, der wiederum mit der landwirtschaftlichen Maschine als Trag- und/oder Führungsteil verbindbar ist, und wobei zur parallelen Anhebung bzw. Absenkung des Rahmens zum Rahmen dem Lenkerparallelogramm eine mit Druckmittel beaufschlagbare Kolben-Zylinderanordnung zugeordnet ist.

DE 33 23 668 A1 löst die Aufgabe, in Verbindung mit einem Einphasen-Schnellkuppler und einer selbsttätigen Gelenkwellenkupplung ein Arbeitsgerät anzukuppeln sowie die Funktion von Entlastungs-Federn herzustellen, indem an beiden Unterlenkern einer Schlepper-Hydraulik winkelförmige Hebel drehbar angeordnet sind, deren ersten Enden beim Ankuppeln eines Mähwerks nach unten gedrückt werden und dabei mittels ihrer zweiten Enden die Entlastungs-Federn spannen.

Aus der DE 196 24 396 A1 ist es bereits bekannt, dass ein Mähwerk für einen Frontanbau an ein landwirtschaftliches Zugfahrzeug zusätzlich zum Anbaurahmen über einen Tragrahmen verfügt, an welchem die Mäheinheit des Mähwerks angreift. Ferner ist es aus diesem Stand der Technik bekannt, dass der Tragrahmen, an welchem die Mäheinheit angreift, und der Anbaurahmen, über welchen das Mähwerk an ein Fronthubwerk eines landwirtschaftlichen Fahrzeugs koppelbar sind, über Stangen unter Ausbildung einer trapezartigen Viergelenkskinematik miteinander gekoppelt sind, nämlich derart, dass eine unter Stange über eine erste Schwenkachse am Tragrahmen und über eine zweite Schwenkachse am Anbaurahmen angreift, und dass eine obere Stange über eine dritte Schwenkachse am Tragrahmen und über eine vierte Schwenkachse am Anbaurahmen angreift. Ein Momentanpol dieser Kinematik liegt dabei auf jeden Fall unterhalb der horizontal zu mähenden Bodenfläche.

Hiervon ausgehend liegt der vorliegenden Erfindung die Aufgabe zugrunde, ein neuartiges Mähwerk für einen Frontanbau an ein landwirtschaftliches Zugfahrzeug zu schaffen.

Diese Aufgabe wird durch ein Mähwerk nach Anspruch 1 gelöst.

Erfindungsgemäß ist die trapezartige Viergelenkskinematik derart ausgebildet, dass eine sich durch die erste Schwenkachse und die zweite Schwenkachse erstreckende erste Gerade und eine sich durch die dritte Schwenkachse und die vierte Schwenkachse erstreckende zweite Gerade in allen Positionen der Viergelenkskinematik in einem Momentanpol schneiden, der dann, wenn das Mähwerk an einen Frontanbau eines landwirtschaftlichen Zugfahrzeugs gekoppelt ist, in allen Positionen der Viergelenkskinematik hinter dem Mähwerk und oberhalb einer zu mähenden Bodenoberfläche liegt.

Beim erfindungsgemäßen Mähwerk liegt der Momentanpol der Viergelenkskinematik dann, wenn das Mähwerk an einen Frontanbau eines landwirtschaftlichen Zugfahrzeugs gekoppelt ist, stetes hinter dem Mähwerk und stets oberhalb der zu bearbeitenden bzw. zu mähenden Bodenoberfläche. Hiermit ist selbst bei Mähwerken, die ein hohes Gewicht aufweisen, eine gute Bodenanpassung an die zu mähende Bodenoberfläche gewährleistet, und zwar mit hoher Dynamik und unter geringem Auflagegewicht auf den zu mähenden Boden. Hierdurch kann bei geringem Verschleiß und geringem Kraftstoffverbrauch ein optimales Mähergebnis gewährleistet werden.

Vorzugsweise schließen die erste Gerade und die zweite Gerade in allen Positionen der Viergelenkskinematik einen Winkel zwischen 3° und 20° ein. Diese Ausgestaltung der Viergelenkskinematik ist zur Gewährleistung eines optimalen Mähergebnisses bei hoher Dynamik für die Bodenanpassung und geringem Auflagegewicht besonders vorteilhaft.

Vorzugsweise greift ein Aushubzylinder, der im Mähbetrieb passiv geschaltet ist, einerseits am Anbaurahmen und andererseits am Schwenkrahmen gelenkig an, nämlich über ein Zylinderkolbengehäuse am Anbaurahmen und über einen Zylinderkolben am Schwenkrahmen.

Ein Entlastungszylinder, der im Mähbetrieb aktiv geschaltet ist, greift einerseits am Anbaurahmen und andererseits am Schwenkrahmen gelenkig an, nämlich über ein Zylinderkolbengehäuse am Anbaurahmen und über einen Zylinderkolben am Schwenkrahmen.

Das Zylinderkolbengehäuse des Aushubzylinders und das Zylinderkolbengehäuse des Entlastungszylinders greifen dabei über getrennte Schwenkachsen am Anbaurahmen gelenkig an, wobei der Zylinderkolben des Aushubzylinders und der Zylinderkolben des Entlastungszylinders über getrennte Schwenkachsen oder über eine gemeinsame Schwenkachse am Schwenkrahmen gelenkig angreifen. Diese Anbindung des Aushubzylinders, der im Mähbetrieb passiv geschaltet ist, und des Entlastungszylinders, der im Mähbetrieb aktiv geschaltet ist, an die Viergelenkskinematik aus Anbaurahmen, Tragrahmen, Schwenkrahmen und Lenker ist zur Gewährleistung einer hohen Anpassdynamik des Mähwerks an die zu mähende Bodenoberfläche bei geringem Auflagegewicht bevorzugt.

Die Mäheinheit weist vorzugsweise einen Mähbalken und einen den Mähbalken aufnehmenden Mähbalkenträger auf, wobei der Mähbalken am Mähbalkenträger gelenkig angreift, und wobei der Mähbalkenträger am Tragrahmen gelenkig angreift. Diese Ausgestaltung der Mäheinheit und die Anbindung der Mäheinheit an die Viergelenkskinematik, nämlich an den Tragrahmen derselben, dient auch der Bereitstellung einer hohen Anpassdynamik des Mähwerks an die zu bearbeitende Bodenoberfläche bei geringem Auflagegewicht des Mähwerks.

Nach einer vorteilhaften Weiterbildung der Erfindung weist das Mähwerk eine Parkklappe auf, die am Anbaurahmen zusammen mit dem Aushubzylinder gelenkig gelagert und relativ zum Aushubzylinder zwischen einer Arbeitsstellung, in welcher die Parkklappe die Viergelenkskinematik uneingeschränkt freigibt, und einer Parkstellung, in welcher die Parkklappe einen Anschlag für die Viergelenkskinematik zur Blockierung derselben bildet, verlagerbar ist. Die Parkklappe erlaubt in einer Parkstellung die Blockierung der Viergelenkskinematik, um das Mähwerk im vom landwirtschaftlichen Zugfahrzeug abgekoppelten Zustand definiert abzustellen.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein erfindungsgemäßes Mähwerk für einen Frontanbau an ein landwirtschaftliches Zugfahrzeug in einer ersten Position desselben;
- Fig. 2: das Mähwerk der Fig. 2 in einer zweiten Position desselben;
- Fig. 3: das Mähwerk der Fig. 2 in einer dritten Position desselben;
- Fig. 4: eine Weiterbildung des Mähwerks der Fig. 1 mit einer Parkklappe in Arbeitsstellung in einer ersten Position des Mähwerks;
- Fig. 5: das Mähwerk der Fig. 4 mit der Parkklappe in Arbeitsstellung in einer zweiten Position des Mähwerks;
- Fig. 6: das Mähwerk der Fig. 4 mit der Parkklappe in Parkstellung in einer ersten Position des Mähwerks; und
- Fig. 7: das Mähwerk der Fig. 4 mit der Parkklappe in Parkstellung in einer zweiten Position des Mähwerks.

Die hier vorliegende Erfindung betrifft ein Mähwerk für einen Frontanbau an ein landwirtschaftliches Zugfahrzeug.

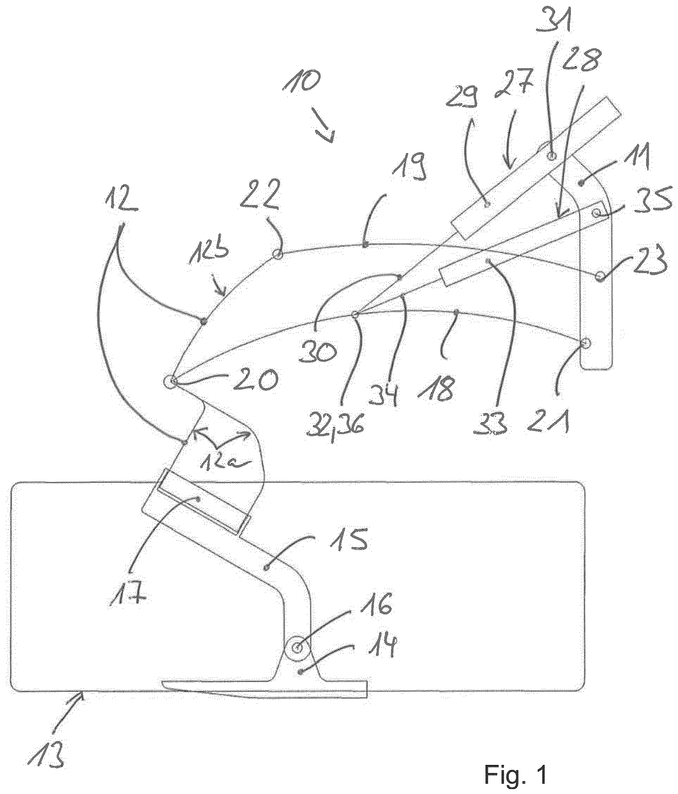

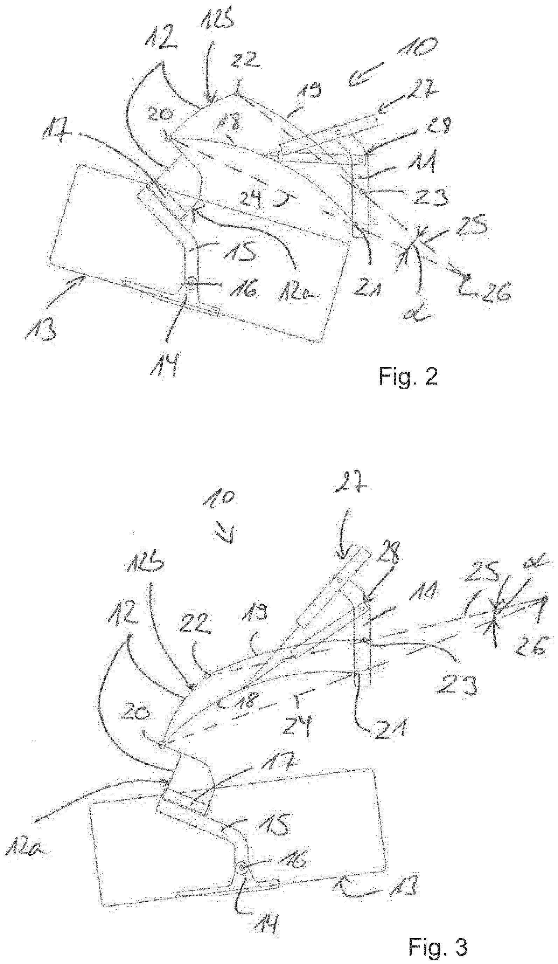

Fig. 1 und 3 zeigen ein Mähwerk 10 für einen Frontanbau an ein landwirtschaftliches Zugfahrzeug nach einem ersten Ausführungsbeispiel der Erfindung. Das Mähwerk 10 der Fig. 1 bis 3 verfügt über einen Anbaurahmen 11, über welchen das Mähwerk 10 an ein Fronthubwerk eines landwirtschaftlichen Zugfahrzeugs ankoppelbar ist. So ist es zum Beispiel möglich, das Mähwerk 10 über den Anbaurahmen 11 an ein sogenanntes Waiste-Dreieck des Fronthubwerks des Zugfahrzeugs anzukoppeln. Ebenfalls ist es möglich, das Mähwerk 10 über den Anbaurahmen 11 fest mit einem Fronthubwerk eines landwirtschaftlichen Zugfahrzeugs zu verbinden.

Das Mähwerk 10 verfügt weiterhin über einen Tragrahmen 12. Der Tragrahmen 12 verfügt über einen unteren Abschnitt 12a und einen oberen Abschnitt 12b.

An dem Tragrahmen 12 greift eine Mäheinheit 13 des Mähwerks 10 an. Gemäß Fig. 3 umfasst die Mäheinheit 13 des Mähwerks 10 einen Mähbalken 14 sowie einen Mähbalkenträger 15, wobei der Mähbalken 14 über eine Schwenkachse 16 an dem Mähbalkenträger 14 gelenkig angreift, und wobei der Mähbalkenträger 15 über eine Schwenkachse 17 an dem Tragrahmen 12 des Mähwerks 10 gelenkig angreift, nämlich an dem unteren Abschnitt 12a des Tragrahmens 12.

Die Schwenkachse 16, die der Anbindung des Mähbalkens 14 an den Mähbalkenträger 15 dient, verläuft dabei in Querrichtung des Zugfahrzeugs, also quer zur Fahrtrichtung desselben, im Wesentlichen horizontal und damit parallel zur zu bearbeitenden bzw. zu mähenden Bodenoberfläche.

Die Schwenkachse 17, die der gelenkigen Anbindung des Mähbalkenträgers 15 am Tragrahmen 12 dient, verläuft in Längsrichtung bzw. Fahrtrichtung des Zugfahrzeugs und ist gegenüber der zu mähenden Bodenoberfläche schräggestellt.

Der Tragrahmen 12 und der Anbaurahmen 11 sind einerseits über einen Schwenkrahmen 18 und andererseits über einen Lenker 19 unter Ausbildung einer trapezartigen Viergelenkskinematik miteinander gekoppelt, nämlich derart, dass der Schwenkrahmen 18 über eine erste Schwenkachse 20 am Tragrahmen 12 und über eine zweite Schwenkachse 21 am Anbaurahmen 11 gelenkig angreift, wohingegen der Lenker 19 über eine dritte Schwenkachse 22 am Tragrahmen 12 und über eine vierte Schwenkachse 23 am Anbaurahmen 11 gelenkig angreift. Schwenkrahmen 18 und Lenker 19 greifen insbesondere an dem oberen Abschnitt 12b des Tragrahmens 12 an, der Schwenkrahmen 18 vorzugweise in einem Übergangsbereich zwischen dem unteren und oberen Abschnitt des Tragrahmens 12.

Diese Schwenkachsen 20, 21, 22, und 23 dieser trapezartigen Viergelenkskinematik aus dem Tragrahmen 12, dem Anbaurahmen 11, dem Schwenkrahmen 18 und dem Lenker 19, erstrecken sich dabei vorzugsweise parallel zur Schwenkachse 16, also jeweils in Querrichtung des Zugfahrzeugs in etwa parallel zu der zu bearbeitenden bzw. zu mähenden Bodenoberfläche.

Wie insbesondere Fig. 2 und 3 entnommen werden kann, ist die trapezartige Viergelenkskinematik aus den über die vier Schwenkachsen 20, 21, 22 und 23 gekoppelten Elementen Tragrahmen 12, Anbaurahmen 11, Schwenkrahmen 18 und Lenker 19, derart ausgebildet, dass eine sich durch die erste Schwenkachse 20 und zweite Schwenkachse 22 erstreckende erste Gerade 24 und eine sich durch die dritte Schwenkachse 22 und die vierte Schwenkachse 23 erstreckende zweite Gerade 25 sich in einem Momentanpol 26 der Viergelenkskinematik schneiden, der erfindungsgemäß in allen Positionen der Viergelenkskinematik dann, wenn das Mähwerk an einen Frontaufbau eines landwirtschaftlichen Zugfahrzeugs gekoppelt ist, hinter dem Mähwerk 10 und oberhalb der zu mähenden bzw. zu bearbeitenden Bodenoberfläche liegt. Hiermit kann eine hohe Verstelldynamik des Mähwerks 10 zur Anpassung desselben an die zu mähende Bodenoberfläche bei geringem Auflagegewicht des Mähwerks 10 auf der Bodenoberfläche gewährleistet werden.

In diesem Zusammenhang ist es besonders vorteilhaft, wenn die erste Gerade 24 und die zweite Gerade 25, die sich in dem Momentanpol 26 schneiden, in allen Positionen der Viergelenkskinematik einen Winkel zwischen 3° und 20°.

Insbesondere schließen die Geraden 24 und 25, die sich in dem Momentanpol 26 schneiden, einen Winkel zwischen 3° und 15° ein.

Das Mähwerk 10 verfügt weiterhin über einen Aushubzylinder 27 sowie einen Entlastungszylinder 28. Der Aushubzylinder 27 des Mähwerks 10 ist im Mähbetrieb passiv geschaltet, wohingegen der Entlastungszylinder 28 des Mähwerks 10 im Mähbetrieb aktiv geschaltet ist. Statt einem Entlastungszylinder kann auch eine oder mehrere Federn - wie z.B. Zugfedern - vorgesehen werden.

Über den Entlastungszylinder 28 des Mähwerks 10 kann Gewicht des Mähwerks 10 abgefangen werden, um die Auflagekraft desselben auf dem zu mähenden Boden so gering wie möglich zu halten.

Der im Mähbetrieb passiv geschaltete Aushubzylinder 27 des Mähwerks 10 dient dem Anheben des Mähwerks 10 aus der Mähstellung heraus, zum Beispiel in eine Transportstellung.

Der Aushubzylinder 27, der im Mähbetrieb passiv geschaltet ist, greift einerseits am Anbaurahmen 11 und andererseits am Schwenkrahmen 18 gelenkig an, nämlich über ein Zylinderkolbengehäuse 29 des Aushubzylinders 27 am Anbaurahmen 11 und über einen Zylinderkolben 30 des Aushubzylinders 27 am Schwenkrahmen 18. So greift das Zylinderkolbengehäuse 29 des Aushubzylinders 27 über eine Schwenkachse 31 am Anbaurahmen 11 und der Zylinderkolben 30 über eine Schwenkachse 32 am Schwenkrahmen 18 an. Die Schwenkachsen 31, 32 erstrecken sich dabei vorzugsweise parallel zu den Schwenkachsen 16, 20, 21, 22 und 23.

Der Entlastungszylinder 28, der im Mähbetrieb aktiv geschaltet ist, greift ebenfalls einerseits am Anbaurahmen 11 und andererseits am Schwenkrahmen 18 gelenkig an, nämlich über ein Zylinderkolbengehäuse 33 des Entlastungszylinders 28 am Anbaurahmen 11 und über einen Zylinderkolben 34 des Entlastungszylinders 28 am Schwenkrahmen 18. Fig. 1 kann dabei entnommen werden, dass das Zylinderkolbengehäuse 33 des Entlastungszylinders 28 am Anbaurahmen 11 über eine Schwenkachse 35 und der Zylinderkolben 34 desselben über eine Schwenkachse 36 am Schwenkrahmen 18 gelenkig angreift. Die Schwenkachsen 35, 36 erstrecken sich dabei vorzugsweise parallel zu den Schwenkachsen 31, 32.

In Fig. 1 fallen dabei die Schwenkachsen 32, 36, über welche die Zylinderkolben 30, 34 von Aushubzylinder 27 und Entlastungszylinder 28 am Schwenkrahmen gelenkig angreifen, zusammen.

Im Unterschied hierzu ist es jedoch auch möglich, dass diese Schwenkachsen 32, 36, ebenso wie die Schwenkachsen 31, 35, über welche die Zylinderkolbengehäuse 29, 33 von Aushubzylinder 27 und Entlastungszylinder 28 am Anbaurahmen 11 angreifen, auseinanderfallen.

Die obige Anbindung von Aushubzylinder 27 und Entlastungszylinder 28 an den Schwenkrahmen 18 und den Anbaurahmen 11 der Viergelenkskinematik ist zur Gewährleistung einer hohen Anpassdynamik des Mähwerks 10 an die zu mähende Bodenoberfläche bei geringem Auflagegewicht desselben auf der Bodenoberfläche besonders bevorzugt.

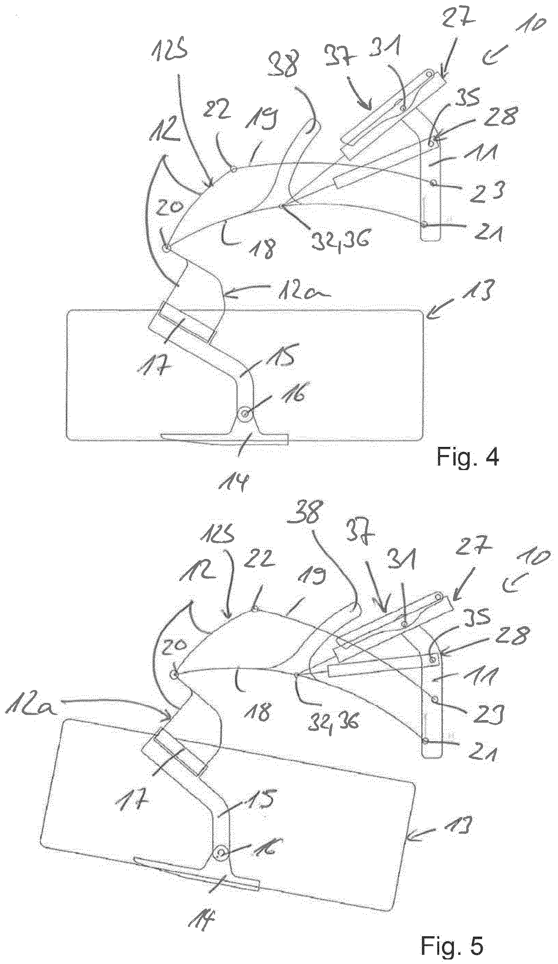

Fig. 4 bis 7 zeigen eine vorteilhafte Weiterbildung des Mähwerks 10 der Fig. 1 bis 3, die sich hinsichtlich des grundsätzlichen Aufbaus der Viergelenkskinematik, die vom Anbaurahmen 11, vom Tragrahmen 12, vom Schwenkrahmen 18 und vom Lenker 19 bereitgestellt wird, sowie hinsichtlich der Anbindung von Aushubzylinder 27 und Entlastungszylinder 28 an diese Viergelenkskinematik vom Ausführungsbeispiel der Fig. 1 bis 3 nicht unterscheidet. Daher werden für das Ausführungsbeispiel der Fig. 4 bis 7 für gleiche Baugruppen gleiche Bezugsziffern verwendet wie im Ausführungsbeispiel der Fig. 1 bis 3.

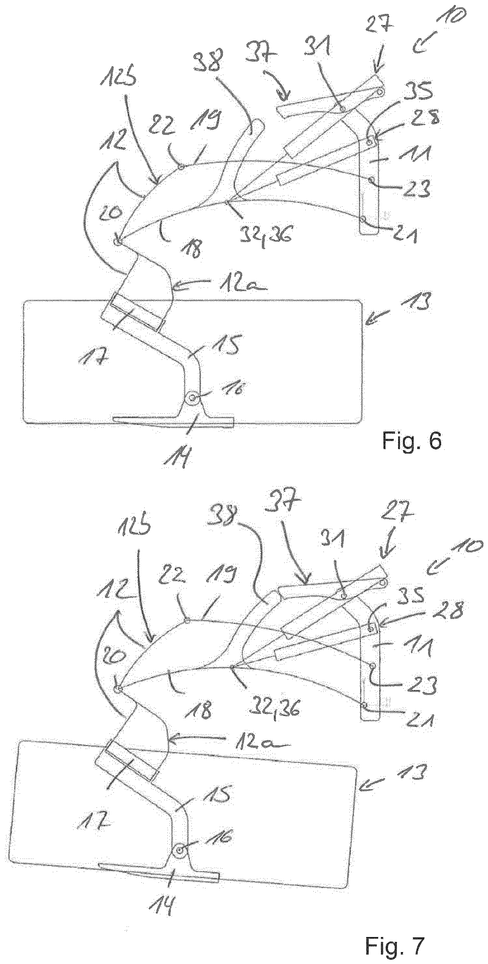

Das Ausführungsbeispiel der Fig. 4 bis 7 unterscheidet sich vom Ausführungsbeispiel der Fig. 1 bis 3 dadurch, dass das Mähwerk 10 der Fig. 4 bis 7 zusätzlich über eine Parkklappe 37 verfügt. Die Parkklappe 37 ist am Anbaurahmen 11 zusammen mit dem Aushubzylinder 27 gelenkig gelagert, und zwar derart, dass die Parkklappe 37 um die Schwenkachse 31 des Zylinderkolbengehäuses 29 des Aushubzylinders 27 zwischen zwei unterschiedlichen Stellungen verschwenkt werden kann, nämlich zwischen einer Arbeitsstellung und einer Parkstellung. Fig. 4 und 5 zeigen die Parkklappe 37 in der Arbeitsstellung und Fig. 6 und 7 zeigen die Parkklappe 37 in der Parkstellung.

Dann, wenn die Parkklappe 37 die in Fig. 4 und 5 gezeigte Arbeitsstellung einnimmt und in dieser Arbeitsstellung verriegelt ist, wird die Parkklappe 37 stets zusammen mit dem Aushubzylinder 27 verlagert, und zwar unter Beibehaltung der Relativposition zwischen der Parkklappe 37 und dem Aushubzylinder 27, wobei dann in dieser Relativposition die Parkklappe 27 die Verlagerbarkeit der Viergelenkskinematik uneingeschränkt zulässt.

In der Parkstellung der Fig. 6 und 7 ist die Parkklappe 37 relativ zum Aushubzylinder 27 in eine Relativposition verschwenkt und in dieser Relativposition fixiert, in welcher die Parklappe 37 einen Anschlag für die Viergelenkskinematik zur Blockierung derselben bildet, wobei die in die Parkstellung der Fig. 6 und 7 überführte Parkklappe 37 mit einem Abschnitt 38 des Schwenkrahmens 18 zusammenwirkt. Auch in der Parkstellung wird die Parkklappe 37 zusammen mit dem Aushubzylinder 27 verlagert, und zwar unter Beibehaltung der Relativposition zwischen der Parkklappe 37 und dem Aushubzylinder 27.

Fig. 7 zeigt, dass die in die Parkstellung verschwenkte und in der Parkstellung fixierte Parkklappe 37 an dem Abschnitt 38 des Schwenkrahmens 18 zur Anlage kommt, sodass dann die Verschwenkbarkeit der Viergelenkskinematik durch das Zusammenspiel der Parkklappe 37 mit dem Abschnitt 38 des Schwenkrahmens 18 blockiert ist. Hierdurch ist es möglich, nach Abkoppeln des Mähwerks 10 von einem Fronthubwerk eines landwirtschaftlichen Zuggeräts das Mähwerk 10 definiert abzustellen.

### Bezugszeichenliste

- 10: Mähwerk
- 11: Anbaurahmen
- 12: Tragrahmen
- 13: Mäheinheit
- 14: Mähbalken
- 15: Mähbalkenträger
- 16: Schwenkachse
- 17: Schwenkachse
- 18: Schwenkrahmen
- 19: Lenker
- 20: Schwenkachse
- 21: Schwenkachse
- 22: Schwenkachse
- 23: Schwenkachse
- 24: Gerade
- 25: Gerade
- 26: Momentanpol
- 27: Aushubzylinder
- 28: Entlastungszylinder
- 29: Zylinderkolbengehäuse
- 30: Zylinderkolben
- 31: Schwenkachse
- 32: Schwenkachse
- 33: Zylinderkolbengehäuse
- 34: Zylinderkolben
- 35: Schwenkachse
- 36: Schwenkachse
- 37: Parkklappe
- 38: Abschnitt

## Patentansprüche

1. Mähwerk (10) für einen Frontanbau an ein landwirtschaftliches Zugfahrzeug, mit einem Anbaurahmen (11), über welchen das Mähwerk an ein Fronthubwerk eines landwirtschaftlichen Zugfahrzeugs ankoppelbar ist, und mit einem Tragrahmen (12), an welchem eine Mäheinheit (13) angreift, wobei der Tragrahmen (12) und der Anbaurahmen (11) einerseits über einen Schwenkrahmen (18) und anderseits über einen Lenker (19) unter Ausbildung einer trapezartigen Viergelenkskinematik derart miteinander gekoppelt sind, dass der Schwenkrahmen (18) über eine erste Schwenkachse (20) am Tragrahmen und über eine zweite Schwenkachse (21) am Anbaurahmen angreift, und dass der Lenker (19) über eine dritte Schwenkachse (22) am Tragrahmen und über eine vierte Schwenkachse (23) am Anbaurahmen angreift, **dadurch gekennzeichnet, dass** die trapezartige Viergelenkskinematik derart ausgebildet ist, dass eine sich durch die erste Schwenkachse (20) und die zweite Schwenkachse (21) erstreckende erste Gerade (24) und eine sich durch die dritte Schwenkachse (22) und die vierte Schwenkachse (23) erstreckende zweite Gerade (25) in einem Momentanpol (26) schneiden, der dann, wenn das Mähwerk an einen Frontanbau eines landwirtschaftlichen Zugfahrzeugs gekoppelt ist, in allen Positionen der Viergelenkskinematik hinter dem Mähwerk und oberhalb einer zu mähenden Bodenoberfläche liegt.

2. Mähwerk nach Anspruch 1, **dadurch gekennzeichnet, dass** die erste Gerade (24) und die zweite Gerade (25) in allen Positionen der Viergelenkskinematik einen Winkel zwischen 3° und 20° einschließen.

3. Mähwerk nach Anspruch 2, **dadurch gekennzeichnet, dass** die erste Gerade (24) und die zweite Gerade (25) in allen Positionen der Viergelenkskinematik einen Winkel zwischen 3° und 15° einschließen.

4. Mähwerk nach einem der Ansprüche 1 bis 3, **dadurch gekennzeichnet, dass** ein Aushubzylinder (27), der im Mähbetrieb passiv geschaltet ist, einerseits am Anbaurahmen (11) und andererseits am Schwenkrahmen (12) gelenkig angreift, nämlich über ein Zylinderkolbengehäuse (29) am Anbaurahmen (11) und über einen Zylinderkolben (30) am Schwenkrahmen (12).

5. Mähwerk nach einem der Ansprüche 1 bis 4, **dadurch gekennzeichnet, dass** ein Entlastungszylinder (28), der im Mähbetrieb aktiv geschaltet ist, einerseits am Anbaurahmen (11) und andererseits am Schwenkrahmen (12) gelenkig angreift, nämlich über ein Zylinderkolbengehäuse (33) am Anbaurahmen (11) und über einen Zylinderkolben (34) am Schwenkrahmen (12).

6. Mähwerk nach Anspruch 4 und 5, **dadurch gekennzeichnet, dass** das Zylinderkolbengehäuse (29) des Aushubzylinders (27) und das Zylinderkolbengehäuse (33) des Entlastungszylinders (29) über getrennte Schwenkachsen (31, 35) am Anbaurahmen (11) gelenkig angreifen.

7. Mähwerk nach Anspruch 6, **dadurch gekennzeichnet, dass** der Zylinderkolben (30) des Aushubzylinders 27 und der Zylinderkolben (34) des Entlastungszylinders (29) über getrennte Schwenkachsen oder über eine gemeinsame Schwenkachse (32, 36) am Schwenkrahmen (18) gelenkig angreifen.

8. Mähwerk nach einem der Ansprüche 1 bis 7, **dadurch gekennzeichnet, dass** die Mäheinheit (13) einen Mähbalken (14) und einen den Mähbalken (14) aufnehmenden Mähbalkenträger (15) aufweist, wobei der Mähbalken (14) am Mähbalkenträger (15) gelenkig angreift, und wobei der Mähbalkenträger (15) am Tragrahmen (12) gelenkig angreift.

9. Mähwerk nach einem der Ansprüche 1 bis 8, **gekennzeichnet durch** eine Parkklappe (37), die am Anbaurahmen (11) zusammen mit dem Aushubzylinder (27) gelenkig gelagert und relativ zum Aushubzylinder (27) zwischen einer Arbeitsstellung, in welcher dieselbe die Viergelenkskinematik uneingeschränkt freigibt, und einer Parkstellung, in welcher dieselbe einen Anschlag für die Viergelenkskinematik zur Blockierung derselben bildet, verlagerbar ist.

10. Mähwerk nach Anspruch 9, **dadurch gekennzeichnet, dass** die Parkklappe (37) in der Arbeitsstellung und in der Parkstellung derart fixierbar ist, dass sich die Relativposition zwischen Parkklappe (37) und Aushubzylinder (27) weder in der Arbeitsstellung noch in der Parkstellung ändert.

11. Mähwerk nach Anspruch 9 oder 10, **dadurch gekennzeichnet, dass** die Parkklappe (27) in der Parkstellung mit einem Abschnitt (28) des Schenkrahmens (18) zusammenwirkt.

## Claims

1. A mowing mechanism (10) for a front attachment to an agricultural towing vehicle comprising an attachment frame (11) by way of which the mowing mechanism can be coupled to a front lifting unit of an agricultural towing vehicle, and a support frame (12) which a mowing unit (13) engages, wherein the support frame (12) and the attachment frame (11) are connected together on the one hand by way of a pivot frame (18) and on the other hand by way of a link (19) forming a trapezoidal four-bar kinematic link mechanism in such a way that the pivot frame (18) engages the support frame by way of a first pivot axis (20) and engages the attachment frame by way of a second pivot axis (21) and the link (19) engages the support frame by way of a third pivot axis (22) and engages the attachment frame by way of a fourth pivot axis (23), **characterised in that** the trapezoidal four-bar kinematic link mechanism is of such a configuration that a first straight line (24) extending through the first pivot axis (20) and the second pivot axis (21) and a second straight line (25) extending through the third pivot axis (22) and the fourth pivot axis (23) intersect at an instantaneous centre of rotation (26) which, when the mowing mechanism is coupled to a front attachment of an agricultural towing vehicle, is behind the mowing mechanism and above a ground surface to be mowed in all positions of the four-bar kinematic link mechanism.

2. A mowing mechanism according to claim 1 **characterised in that** the first straight line (24) and the second straight line (25) include an angle of between 3° and 20° in all positions of the four-bar kinematic link mechanism.

3. A mowing mechanism according to claim 2 **characterised in that** the first straight line (24) and the second straight line (25) include an angle of between 3° and 15° in all positions of the four-bar kinematic link mechanism.

4. A mowing mechanism according to one of claims 1 to 3 **characterised in that** a lifting cylinder (27) which is switched passively in the mowing mode hingedly engages on the one hand the attachment frame (11) and on the other hand the pivot frame (12), more specifically by way of a cylinder piston housing (29) the attachment frame (11) and by way of a cylinder piston (30) the pivot frame (12).

5. A mowing mechanism according to one of claims 1 to 4 **characterised in that** a load relief cylinder (28) which is switched actively in the mowing mode hingedly engages on the one hand the attachment frame (11) and on the other hand the pivot frame (12), more specifically by way of a cylinder piston housing (33) the attachment frame (11) and by way of a cylinder piston (34) the pivot frame (12).

6. A mowing mechanism according to claims 4 and 5 **characterised in that** the cylinder piston housing (29) of the lifting cylinder (27) and the cylinder piston housing (33) of the load relief cylinder (29) hingedly engage the attachment frame (11) by way of separate pivot axes (31, 35).

7. A mowing mechanism according to claim 6 **characterised in that** the cylinder piston (30) of the lifting cylinder (27) and the cylinder piston (34) of the load relief cylinder (29) hingedly engage the pivot frame (18) by way of separate pivot axes or by way of a common pivot axis (32, 36).

8. A mowing mechanism according to one of claims 1 to 7 **characterised in that** the mowing unit (13) has a mowing bar (14) and a mowing bar carrier (15) carrying the mowing bar (14), wherein the mowing bar (14) hingedly engages the mowing bar carrier (15) and wherein the mowing bar carrier (15) hingedly engages the support frame (12).

9. A mowing mechanism according to one of claims 1 to 8 **characterised by** a parking flap (37) which is hingedly mounted to the attachment frame (11) together with the lifting cylinder (27) and is displaceable relative to the lifting cylinder (27) between a working position in which it unrestrictedly frees the four-bar kinematic link mechanism and a parking position in which it forms an abutment for the four-bar kinematic link mechanism for blocking same.

10. A mowing mechanism according to claim 9 **characterised in that** the parking flap (37) can be fixed in the working position and in the parking position in such a way that the relative position between the parking flap (37) and the lifting cylinder (27) changes neither in the working position nor in the parking position.

11. A mowing mechanism according to claim 9 or claim 10 **characterised in that** the parking flap (27) in the parking position cooperates with a portion (28) of the pivot frame (18).

## Revendications

1. Tête de fauchage (10) pour un montage frontal sur un véhicule de traction agricole, comprenant un bâti de montage (11) par l'intermédiaire duquel la tête de fauchage peut être couplée à un relevage avant d'un véhicule de traction agricole, et comprenant un bâti porteur (12) auquel est reliée une unité de fauchage (13), le bâti porteur (12) et le bâti de montage (11) étant couplés l'un à l'autre d'une part par l'intermédiaire d'un bâti pivotant (18) et d'autre part par l'intermédiaire d'un bras (19) en formant un quadrilatère trapézoïdal articulé, de sorte que le bâti pivotant (18) est relié au bâti porteur par l'intermédiaire d'un premier axe de pivotement (20) et au bâti de montage par l'intermédiaire d'un deuxième axe de pivotement (21), et en ce que le bras (19) est relié au bâti porteur par l'intermédiaire d'un troisième axe de pivotement (22) et au bâti de montage par l'intermédiaire d'un quatrième axe de pivotement (23), **caractérisée en ce que** le quadrilatère trapézoïdal articulé est conçu de façon qu'une première droite (24) passant par le premier axe de pivotement (20) et par le deuxième axe de pivotement (21) et une deuxième droite (25) passant par le troisième axe de pivotement (22) et par le quatrième axe de pivotement (23) se coupent en un centre instantané de rotation (26) qui, lorsque la tête de fauchage est couplée à un moyen de montage frontal d'un véhicule de traction agricole, se trouve, dans toutes les positions du quadrilatère articulé, derrière la tête de fauchage et au-dessus d'une surface de sol à faucher.

2. Tête de fauchage selon la revendication 1, **caractérisée en ce que**, dans toutes les positions du quadrilatère articulé, la première droite (24) et la deuxième droite (25) forment un angle compris entre 3° et 20°.

3. Tête de fauchage selon la revendication 3, **caractérisée en ce que**, dans toutes les positions du quadrilatère articulé, la première droite (24) et la deuxième droite (25) forment un angle compris entre 3° et 15°.

4. Tête de fauchage selon une des revendications 1 à 3, **caractérisée en ce qu'**un cylindre de levage (27), qui en mode de fauchage est à l'état passif, est relié de manière articulée d'une part au bâti de montage (11) et d'autre part au bâti pivotant (12), à savoir par l'intermédiaire d'un carter de piston de cylindre (29) au bâti de montage (11) et par l'intermédiaire d'un piston de cylindre (30) au bâti pivotant (12).

5. Tête de fauchage selon une des revendications 1 à 4, **caractérisée en ce qu'**un cylindre de décharge (28), qui en mode de fauchage est à l'état actif, est relié de manière articulée d'une part au bâti de montage (11) et d'autre part au bâti pivotant (12), à savoir par l'intermédiaire d'un carter de piston de cylindre (33) au bâti de montage (11) et par l'intermédiaire d'un piston de cylindre (34) au bâti pivotant (12).

6. Tête de fauchage selon la revendication 4 et 5, **caractérisée en ce que** le carter de piston de cylindre (29) du cylindre de levage (27) et le carter de piston de cylindre (33) du cylindre de décharge (29) sont reliés de manière articulée au bâti de montage (11) par l'intermédiaire d'axes de pivotement séparés (31, 35).

7. Tête de fauchage selon la revendication 6, **caractérisée en ce que** le piston de cylindre (30) du cylindre de levage 27 et le piston de cylindre (34) du cylindre de décharge (29) sont reliés de manière articulée au bâti pivotant (18) par l'intermédiaire d'axes de pivotement séparés ou d'un axe de pivotement commun (32, 36).

8. Tête de fauchage selon une des revendications 1 à 7, **caractérisée en ce que** l'unité de fauchage (13) comporte un lamier (14) et un porte-lamier (15) recevant le lamier (14), le lamier (14) étant relié au porte-lamier (15) de manière articulée, et le porte-lamier (15) étant relié au bâti porteur (12) de manière articulée.

9. Tête de fauchage selon une des revendications 1 à 8, **caractérisée par** un abattant de stationnement (37) qui est monté de manière articulée sur le bâti de montage (11) conjointement avec le cylindre de levage (27) et est déplaçable par rapport au cylindre de levage (27) entre une position de travail, dans laquelle il donne au quadrilatère articulé une liberté illimitée, et une position de stationnement, dans laquelle il forme une butée pour le quadrilatère articulé afin de bloquer celui-ci.

10. Tête de fauchage selon la revendication 9, **caractérisée en ce que**, dans la position de travail et dans la position de stationnement, l'abattant de stationnement (37) est immobilisé de façon que la position relative entre l'abattant de stationnement (37) et le cylindre de levage (27) ne varie ni dans la position de travail ni dans la position de stationnement.

11. Tête de fauchage selon la revendication 9 ou 10, **caractérisée en ce que**, dans la position de stationnement, l'abattant de stationnement (27) coopère avec une portion (28) du bâti pivotant (18).
